# EUROPEAN PATENT APPLICATION

(11) **EP 4 319 407 A1**
(43) Date of publication of application: **07.02.2024**
(21) Application number: 22779480.7
(22) Date of filing: 01.02.2022
(51) Int. Cl.: H04W 72/04, H04W 24/08

(54) **BASE STATION FUNCTION DEPLOYMENT CONTROL DEVICE, BASE STATION FUNCTION DEPLOYMENT CONTROL METHOD, AND COMPUTER PROGRAM**

(30) Priority: 30.03.2021 JP 2021057804
(71) Applicant: KDDI Research, Inc., Fujimino-shi, Saitama 356-8502 (JP)
(72) Inventor: TSUKAMOTO, Yuu, Fujimino-shi, Saitama 356-8502 (JP); SHINBO, Hiroyuki, Fujimino-shi, Saitama 356-8502 (JP); NANBA, Shinobu, Fujimino-shi, Saitama 356-8502 (JP)
(74) Representative: Krauns, Christian
(86) International application number: PCT/JP2022/003780
(87) International publication number: WO 2022/209251

(57) **Abstract**

A base station function deployment control device includes a base station function deployment information acquisition unit configured to acquire base station function deployment information indicating a current base station function deployment in a radio access network of an open radio access network (O-RAN) specification via an interface with a service and management orchestration (SMO) function unit and a base station function deployment setting information transmission unit configured to transmit base station function deployment setting information indicating change content for changing the base station function deployment in the radio access network via the interface.

## Description

### TECHNICAL FIELD

The present invention relates to a base station function deployment control device, a base station function deployment control method, and a computer program.

Priority is claimed on Japanese Patent Application No. 2021-57804, filed March 30, 2021, the content of which is incorporated herein by reference.

### BACKGROUND ART

In a fifth generation (5G) mobile communication system (hereinafter referred to as a 5G system), studies are being conducted to further improve performance of, for example, throughput, a communication delay, the number of connections, or the like, from an initial system. Also, services such as robot control, connected cars, augmented reality (AR), and virtual reality (VR) are being provided as various types of services using the 5G system. Thus, the importance of satisfying communication quality required by individual services is increasing.

Radio access network (RAN) slicing technology is known as wireless communication technology for satisfying communication quality required by such diversifying services. The RAN slicing technology is technology for dividing the RAN into a plurality of logical networks (slices) and flexibly customizing the slices according to services (see, for example, Patent Document 1).

According to the RAN slicing technology, for example, the deployment of a central unit (CU) and a distributed unit (DU), which are base station functions, is changed, and therefore communication delay, inter-cell cooperation performance, and necessary network resources (radio resources, computer resources, and transport link resources) change. Thus, in the technology described in Patent Document 1, a plurality of slices with different base station function deployment are implemented for a single cell by connecting a plurality of sets, each of which is a set of a virtual CU (vCU) and a virtual DU (vDU), to a radio unit (RU) forming a single cell.

Also, the Open Radio Access Network (O-RAN) Alliance (O-RAN Alliance) is studying technology for enabling the next generation radio access networks such as 5G systems to be open and intelligent (see, for example, Non-Patent Document 1). Among O-RAN specifications formulated by the O-RAN Alliance, in Non-Patent Document 1, a use case for optimizing a network slice subnet instance (NSSI) using a "non-real-time RAN intelligent controller (non-RT RIC)" is defined in accordance with traffic fluctuations.

In the use case of Non-Patent Document 1, the "non-RT RIC" collects a necessary key performance indicator (KPI) from each node via an O1 interface. Parameters capable of being collected through the O1 interface correspond to the parameters defined in Non-Patent Document 2. The parameters are, for example, "DL PRB usage," "UL PRB usage," "Average DL UE throughput," "Average UL UE throughput," "Number of PDU Sessions requested," and the like. The information collected by the "non-RT RIC" is analyzed and a change in the resources for the NSSI is decided. For example, "VNF resources" and "slice subnet attributes" are changed (see Non-Patent Document 3). The "non-RT RIC" changes resource settings related to the NSSI for each node via the O1 interface.

### [Prior Art Documents]

### [Patent Documents]

[Patent Document 1]
Japanese Unexamined Patent Application, First Publication No. 2020-136787

### [Non-Patent Documents]

[Non-Patent Document 1] O-RAN WG1, "Slicing architecture," v03.00, 3.2.3 Use Case 3: NSSI Resource Allocation Optimization
[Non-Patent Document 2] 3GPP, "TS 28.552," V17.1.0, 2020-12
[Non-Patent Document 3] 3GPP, "TS 28.541," V15.4.0, 2019-09

### SUMMARY OF INVENTION

### [Problems to be Solved by the Invention]

Because the traffic demand dynamically changes in the RAN, traffic flowing through each slice also dynamically changes. Also, the required bandwidth for transport link and computer resources at antenna sites and a central office fluctuate due to traffic fluctuations. Thus, in order to meet the quality requirements of many users with limited network resources, it is preferable to adaptively change the base station function deployment of the RAN in accordance with traffic fluctuations.

However, in the above-described use case of Non-Patent Document 1, it is possible to change the settings of the base station functions (resources related to the NSSI) from a control node (a "non-RT RIC"), but it is not possible to change the base station function deployment in the RAN of the O-RAN specification because a specification for changing the base station function deployment is not defined.

The present invention has been made in consideration of such circumstances, and an objective of the present invention is to change a base station function deployment in a radio access network of an O-RAN specification.

### [Means for Solving the Problems]

(1) According to an aspect of the present invention, there is provided a base station function deployment control device including: a base station function deployment information acquisition unit configured to acquire base station function deployment information indicating a current base station function deployment in a radio access network of an open radio access network (O-RAN) specification via an interface with a service and management orchestration (SMO) function unit; and a base station function deployment setting information transmission unit configured to transmit base station function deployment setting information indicating change content for changing the base station function deployment in the radio access network via the interface.
(2) According to an aspect of the present invention, the base station function deployment control device according to (1) is implemented using a non-real-time RAN intelligent controller (non-RT R1C).
(3) According to an aspect of the present invention, in the base station function deployment control device according to (1) or (2), the base station function deployment setting information is information indicating all base station function deployments after a change in the radio access network.
(4) According to an aspect of the present invention, in the base station function deployment control device according to (1) or (2), the base station function deployment setting information is information indicating a node of a change target in the radio access network and a deployment after a change in the node of the change target.
(5) According to an aspect of the present invention, in the base station function deployment control device according to (1) or (2), the base station function deployment setting information is information indicating a deployment of a change target in the radio access network and a node after a change in the deployment of the change target.
(6) According to an aspect of the present invention, there is provided a base station function deployment control method in a radio access network of an open radio access network (O-RAN) specification, the base station function deployment control method including: a base station function deployment information acquisition step in which a base station function deployment control device acquires base station function deployment information indicating a current base station function deployment in the radio access network via an interface with a service and management orchestration (SMO) function unit; and a base station function deployment setting information transmission step in which the base station function deployment control device transmits base station function deployment setting information indicating change content for changing the base station function deployment in the radio access network via the interface.
(7) According to an aspect of the present invention, there is provided a computer program for causing a computer of a base station function deployment control device to execute: a base station function deployment information acquisition step of acquiring base station function deployment information indicating a current base station function deployment in a radio access network of an open radio access network (O-RAN) specification via an interface with a service and management orchestration (SMO) function unit; and a base station function deployment setting information transmission step of transmitting base station function deployment setting information indicating change content for changing the base station function deployment in the radio access network via the interface.

### [Advantageous Effects of the Invention]

According to the present invention, it is possible to change a base station function deployment in a radio access network of an O-RAN specification as an advantageous effect.

### BRIEF DESCRIPTION OF DRAWINGS

FIG. 1 is a block diagram showing a configuration example of a radio access network (RAN) according to an embodiment.
FIG. 2 is an explanatory diagram showing an example of a base station function deployment of the RAN according to the embodiment.
FIG. 3 is a block diagram showing a configuration example of a base station function deployment control unit according to the embodiment.
FIG. 4 is a flowchart of a schematic procedure of a base station function deployment control method according to the embodiment.
FIG. 5 is a sequence diagram showing an example of a detailed procedure of the base station function deployment control method according to the embodiment.
FIG. 6 is an explanatory diagram showing an example of a base station function deployment according to the embodiment.
FIG. 7 is a diagram showing a configuration example of base station function deployment information according to the embodiment.
FIG. 8 is a table showing an example of a change in the base station function deployment according to the embodiment.
FIG. 9 is a table showing a configuration example 1 of base station function deployment setting information according to the embodiment.
FIG. 10 is a table showing a configuration example 2 of base station function deployment setting information according to the embodiment.
FIG. 11 is a table showing a configuration example 3 of base station function deployment setting information according to the embodiment.

### EMBODIMENTS FOR CARRYING OUT THE INVENTION

Hereinafter, embodiments of the present invention will be described with reference to the drawings.

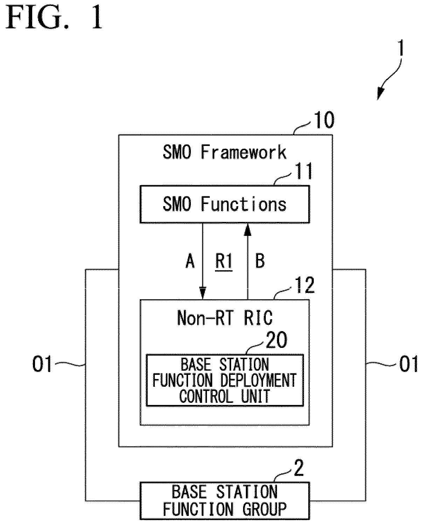

FIG. 1 is a block diagram showing a configuration example of a radio access network according to the embodiment. A radio access network (RAN) 1 shown in FIG. 1 is a RAN to which RAN slicing technology is applied. Also, an O-RAN specification is applied in the RAN 1. However, in the present embodiment, "a configuration for changing the base station function deployment" that is not defined in the O-RAN specification is newly added in the RAN 1.

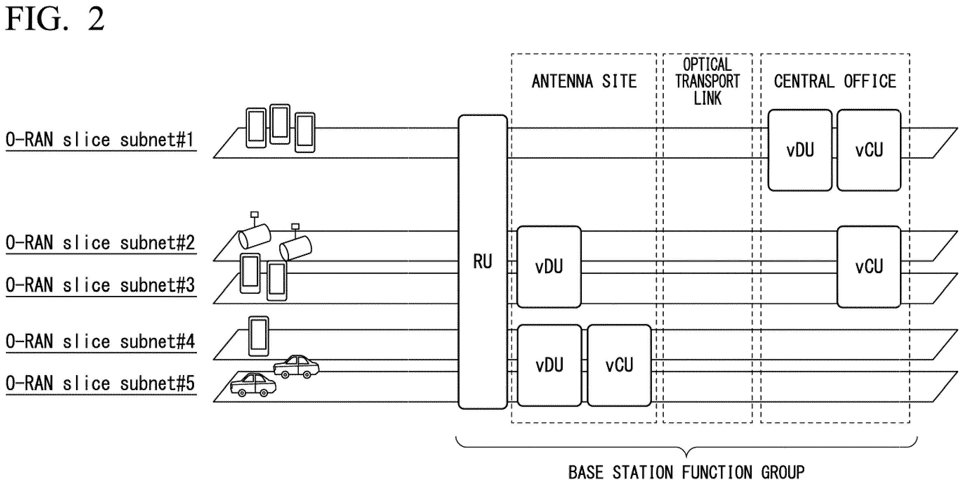

An example of the base station function deployment for the RAN 1 is shown in FIG. 2. In the example of FIG. 2, a total of five sets of vCUs and vDUs are connected to an RU forming a single cell. A first example "O-RAN slice subnet #1" is a centralized-RAN (C-RAN) deployment in which both vCU and vDU are deployed in an central office. The C-RAN deployment has a feature that inter-cell coordination is possible, but the required bandwidth of the transport link is large. A second example "O-RAN slice subnet #2" and a third example "O-RAN slice subnet #3" are split-RAN (S-RAN) deployments in which the vDU is deployed at an antenna site and the vCU is deployed in the central office. The S-RAN deployment does not allow inter-cell coordination, but has a feature that the required bandwidth of the transport link is small. A fourth example "O-RAN slice subnet #4" and a fifth example "O-RAN slice subnet #5" are distributed RAN (D-RAN) deployments in which both vCU and vDU are deployed at the antenna site. The D-RAN deployment does not allow inter-cell coordination, but has a feature of a small communication delay.

As illustrated in FIG. 2, in the RAN 1, it is possible to implement base station function deployment slices having a plurality of different features with respect to a single cell by connecting a plurality of sets of vCUs and vDUs to the RU forming a single cell. Thereby, in the RAN 1, it is possible to provide wireless communication services with a plurality of different features in a single cell, and it is possible to adapt to various communication qualities required by various types of services.

In FIG. 1, the RAN 1 includes a service and management orchestration (SMO) function unit (SMO functions) 11, a "non-real-time RAN intelligent controller (non-RT RIC)" 12 including a base station function deployment control unit 20, and a base station function group 2. The base station function deployment control unit 20 corresponds to a base station function deployment control device. In the present embodiment, the base station function deployment control unit 20 is implemented using the "non-RT RIC" 12. Also, the SMO function unit 11 and the "non-RT RIC" 12 are implemented using an SMO framework 10. The base station function group 2 includes the RU, the vCUs, and the vDUs as illustrated in FIG. 2.

The SMO framework 10 provides an O1 interface defined in the O-RAN specification. The "non-RT RIC" 12 acquires a key performance indicator (KPI) from the base station function group 2 via the O1 interface.

The SMO function unit 11 and the "non-RT RIC" 12 exchange messages via an R1 interface.

In the present embodiment, the "non-RT RIC" 12 newly adds a message A for enabling the "non-RT RIC" 12 to acquire base station function deployment information from the SMO function unit 11 with respect to the R1 interface between the SMO function unit 11 and the "non-RT RIC" 12. The base station function deployment information is information indicating a current base station function deployment in the RAN 1. The SMO function unit 11 transmits the message A including the base station function deployment information to the "non-RT RIC" 12 through the R1 interface. The base station function deployment control unit 20 acquires the base station function deployment information from the message A transmitted from the SMO function unit 11.

Also, in the present embodiment, base station function deployment setting information is newly included in an existing message B to be transmitted to the SMO function unit 11 through the R1 interface by the "non-RT RIC" 12. The base station function deployment setting information is information indicating base station function deployment change content for changing the base station function deployment in the RAN 1. The base station function deployment control unit 20 includes the base station function deployment setting information in the message B transmitted from the "non-RT RIC" 12. The SMO function unit 11 receives the message B including the base station function deployment setting information through the R1 interface. The SMO function unit 11 acquires the base station function deployment setting information from the message B received through the R1 interface.

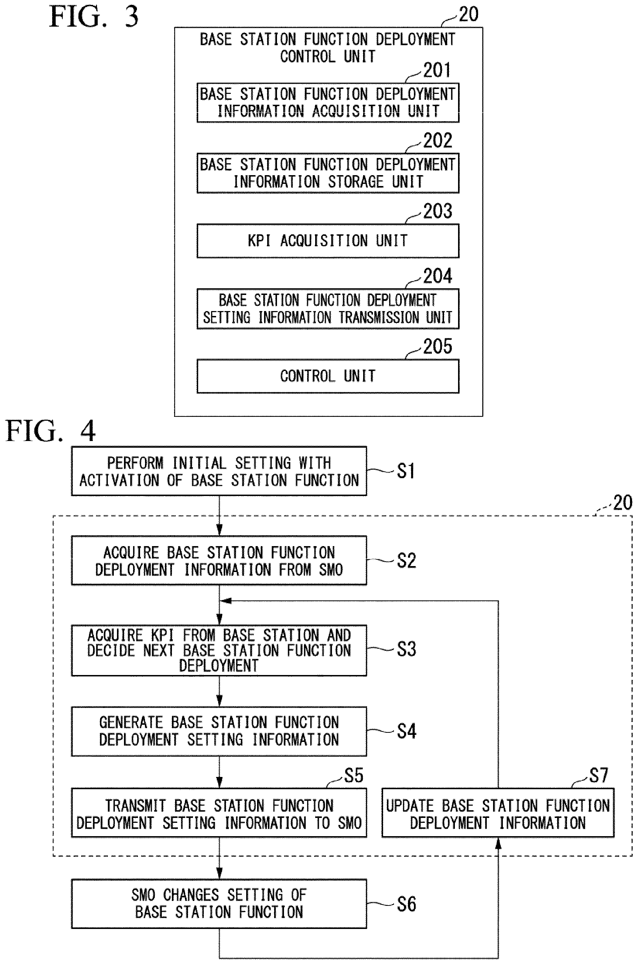

FIG. 3 is a block diagram showing a configuration example of the base station function deployment control unit 20 according to the present embodiment. In FIG. 3, the base station function deployment control unit 20 includes a base station function deployment information acquisition unit 201, a base station function deployment information storage unit 202, a KPI acquisition unit 203, a base station function deployment setting information transmission unit 204, and a control unit 205.

The base station function deployment information acquisition unit 201 acquires base station function deployment information via an interface with the SMO function unit 11. The interface is the R1 interface as an example of the present embodiment. More specifically, the base station function deployment information acquisition unit 201 acquires the base station function deployment information from the message A transmitted from the SMO function unit 11 through the R1 interface.

The base station function deployment information storage unit 202 stores the base station function deployment information acquired by the base station function deployment information acquisition unit 201.

The KPI acquisition unit 203 acquires a KPI from the base station function group 2 via the O1 interface.

The base station function deployment setting information transmission unit 204 transmits base station function deployment setting information via an interface with the SMO function unit 11. The interface is an R1 interface as an example of the present embodiment. More specifically, the base station function deployment setting information transmission unit 204 transmits a message B including the base station function deployment setting information through the R1 interface.

The control unit 205 decides the next base station function deployment on the basis of the KPI acquired by the KPI acquisition unit 203.

Each part of the base station function deployment control unit 20 implements its function by a CPU executing a computer program for implementing the function of each part.

Next, an overall procedure of a base station function deployment control method according to the present embodiment will be described with reference to FIG. 4. FIG. 4 is a flowchart of a schematic procedure of the base station function deployment control method according to the present embodiment.

(Step S1) The SMO function unit 11 performs initial setting for the base station function group 2 after the base station function group 2 is activated.

(Step S2) After the completion of the initial setting of the base station function group 2, the base station function deployment control unit 20 (the base station function deployment information acquisition unit 201) acquires base station function deployment information from the message A transmitted from the SMO function unit 11. The base station function deployment control unit 20 (the base station function deployment information storage unit 202) stores the base station function deployment information.

(Step S3) The base station function deployment control unit 20 (the KPI acquisition unit 203) acquires a KPI from the base station function group 2 via the O1 interface. The base station function deployment control unit 20 (the control unit 205) decides the next base station function deployment on the basis of the KPI acquired by the KPI acquisition unit 203.

(Step S4) The base station function deployment control unit 20 (the control unit 205) generates base station function deployment setting information related to the next base station function deployment that has been decided. The base station function deployment setting information is information indicating base station function deployment change content for changing the base station function deployment in the RAN 1 to the next base station function deployment.

(Step S5) The base station function deployment control unit 20 (the base station function deployment setting information transmission unit 204) transmits a message B including the base station function deployment setting information generated by the control unit 205 to the SMO function unit 11.

(Step S6) The SMO function unit 11 executes setting for changing the base station function deployment of the base station function group 2 on the basis of the base station function deployment setting information included in the message B.

(Step S7) After the completion of the setting for changing the base station function deployment of the base station function group 2, the base station function deployment control unit 20 (the base station function deployment information acquisition unit 201) acquires the base station function deployment information from the message A transmitted from the SMO function unit 11. The base station function deployment control unit 20 (the base station function deployment information storage unit 202) stores the base station function deployment information as the latest base station function deployment information.

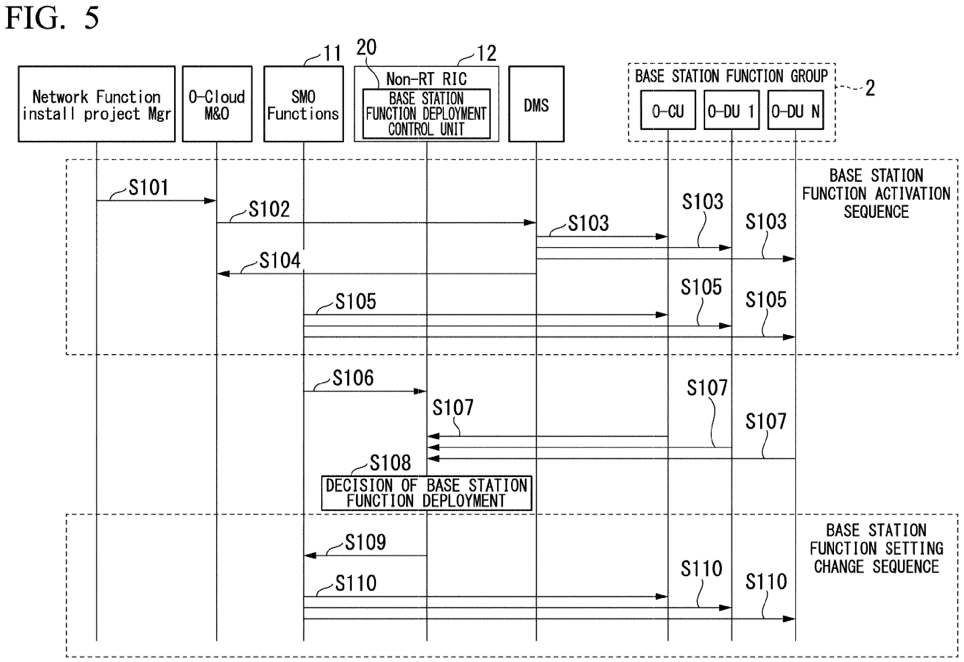

Next, a detailed procedure of the base station function deployment control method according to the present embodiment will be described with reference to FIG. 5. FIG. 5 is a sequence diagram showing an example of the detailed procedure of the base station function deployment control method according to the present embodiment.

First, steps S101 to S105 are executed as a base station function activation sequence. This base station function activation sequence is based on the O-RAN specification "Instantiate Network Function on O-Cloud (O-RAN.WG6.ORCH-USE-CASES-v01.00)."

(Step S101) "Network Function install project Mgr" transmits a "Service Request" message to "O-Cloud M&O."

(Step S102) Subsequently, the "O-Cloud M&O" transmits a "Create workload" message to "DMS" through an O2 interface.

(Step S103) Subsequently, the "DMS" transmits a "Deploy NF" message to each node (O-CU, O-DU1, or O-DUN) of the base station function group 2.

(Step S104) Subsequently, the "DMS" transmits a "Notify workload created" message to the "O-Cloud M&O" through the O2 interface.

(Step S105) Subsequently, the SMO function unit 11 transmits a "Configure NF" message to each node (O-CU, O-DU1, or O-DUN) of the base station function group 2 through the O1 interface.

The above is the base station function activation sequence.

(Step S106) Subsequently, the SMO function unit 11 transmits a message A including base station function deployment information to the "non-RT RIC" 12 through the R1 interface. The base station function deployment control unit 20 acquires base station function deployment information from the message A.

(Step S107) Subsequently, the base station function deployment control unit 20 receives a "Performance measurements" message from each node (O-CU, O-DU1, or O-DUN) of the base station function group 2 through the O1 interface. The base station function deployment control unit 20 acquires a KPI from the "Performance measurements" message.

(Step S108) Subsequently, the base station function deployment control unit 20 decides the next base station function deployment on the basis of the KPI acquired from the "Performance measurements" message. The base station function deployment control unit 20 generates base station function deployment setting information related to the next base station function deployment that has been decided.

Subsequently, steps S109 to S110 are executed as a base station function setting change sequence. This base station function setting change sequence is based on the O-RAN specification "Reconfiguration of O-RAN Virtual Network Function(s) (O-RAN.WG6.ORCH-USE-CASES-v01.00)."

(Step S109) The base station function deployment control unit 20 transmits a Reconfig NF set" message including the base station function deployment setting information generated in step S108 to the SMO function unit 11 through the R1 interface. The " Reconfig NF set" message corresponds to the existing message B. The SMO function unit 11 acquires the base station function deployment setting information from the "Reconfig NF set" message received through the R1 interface.

(Step S110) The SMO function unit 11 transmits a "Configure NF" message to each node (O-CU, O-DU1, or O-DUN) of the base station function group 2 through the O1 interface. This "Configure NF" message includes setting information for changing to the next base station function deployment indicated in the base station function deployment setting information acquired in step S109. Thereby, the base station function deployment of the base station function group 2 is changed to the next base station function deployment.

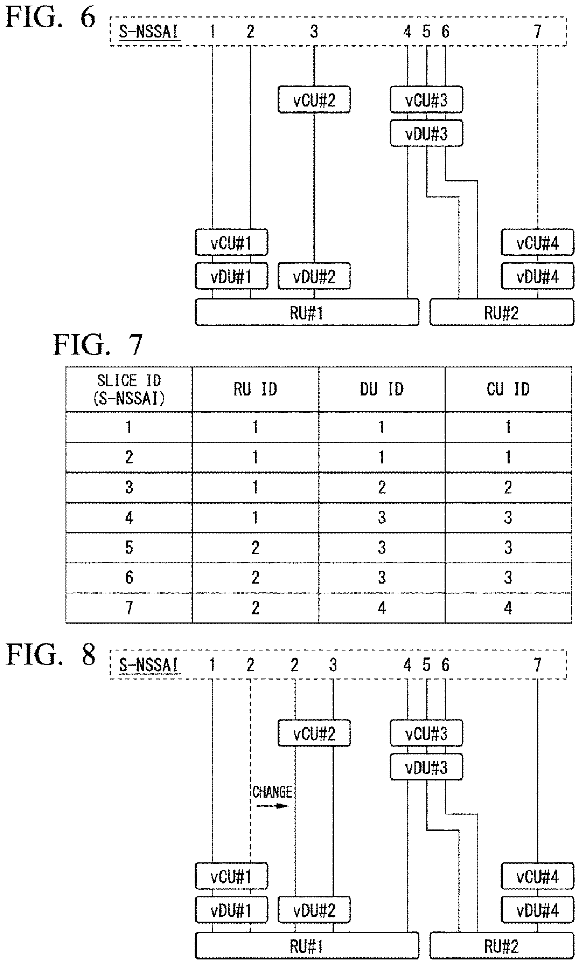

Next, configuration examples of base station function deployment information and base station function deployment setting information according to the present embodiment will be described with reference to FIGS. 6 to 9.

In FIG. 6, an example of the base station function deployment, which is the base station function deployment before the change, is shown. In FIG. 7, base station function deployment information indicating the base station function deployment of FIG. 6 is shown. An S-NSSI is a slice identifier (slice ID). An "RU ID" is an RU identifier. A "DU ID" is a DU identifier. A "CU ID" is a CU identifier. The base station function deployment information shown in FIG. 7 is configured as mapping information in which the base station function deployment of FIG. 6 is associated with each identifier. For example, in a slice with a slice ID of "2," a set of "vDU #1" with "DU ID=1" and "vCU #1" with "CU 1D=1" is connected to "RU #1" with "RU 1D=1." For example, in a slice with a slice ID "5," a set of "vDU #3" with "DU ID=3" and "vCU #3" with "CU ID=3" is connected to "RU #2" with "RU ID=2."

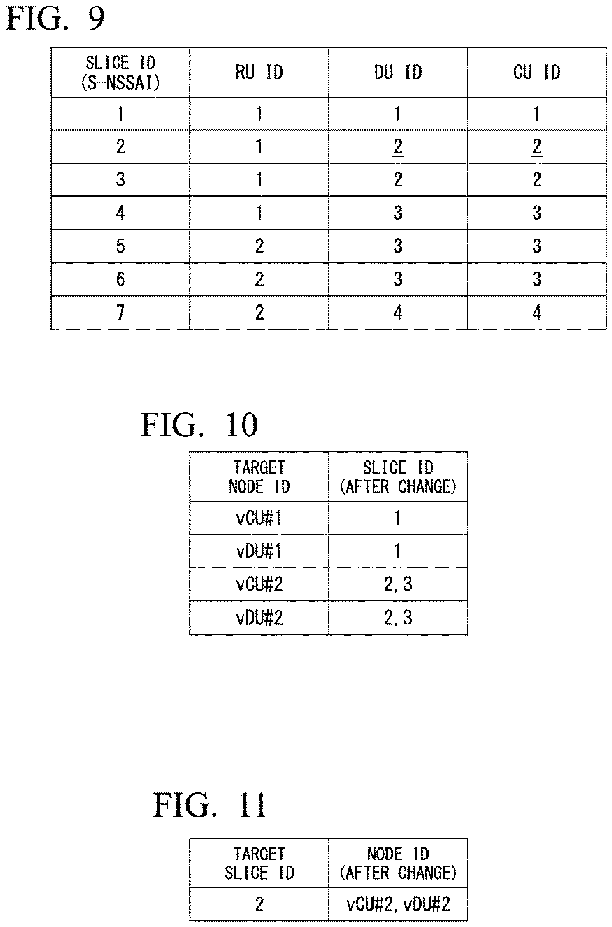

In FIG. 8, a change example of a base station function deployment is shown. The change example of FIG. 8 is a change example from the base station function deployment of FIG. 6. In the change example of FIG. 8, a slice with a slice ID "2" is a change target. The change content is change content in which a set of the vDU and the vCU connected to "RU #1" with "RU ID=1" is changed to a set of "vDU #2" with "DU ID=2" and "vCU #2" with "CU ID=2." As configuration examples of the base station function deployment setting information corresponding to the change example from the base station function deployment of FIG. 6, three types of configuration examples 1, 2, and 3 are shown in FIGS. 9, 10, and 11. Any one of the configuration examples 1, 2, and 3 of the base station function deployment setting information may be applied.

FIG. 9 shows the configuration example 1 of base station function deployment setting information according to the present embodiment. Like the base station function deployment information in FIG. 7, the configuration example 1 of the base station function deployment setting information of FIG. 9 is configured as mapping information in which the changed base station function deployment of FIG. 8 is associated with each identifier. In the configuration example 1 of the base station function deployment setting information of FIG. 9, all the changed base station function deployments are shown. As illustrated in FIG. 9, a set of "vDU" and "vCU" connected to "RU #1" with "RU ID=1" in a slice with a slice ID "2" for the base station function deployment information of FIG. 7 is changed to a set of "vDU #2" with "DU ID=2" and "vCU #2" with "CU 1D=2" (an underlined part in FIG. 9). Only this change is different from the base station function deployment information of FIG. 7. The configuration example 1 of the base station function deployment setting information has a large amount of information, but the base station function deployment setting information is easily generated because it has the same format as the base station function deployment information.

FIG. 10 shows the configuration example 2 of the base station function deployment setting information according to the present embodiment. In the configuration example 2 of the base station function deployment setting information of FIG. 10, the node of the change target and the deployment after the change in the node of the change target are shown. As illustrated in FIG. 10, an identifier of the node of the change target (a target node ID) is associated with a slice ID of a slice after the change. In the change example of FIG. 8, the nodes of the charge target are "vCU #1," "vDU #1," "vCU #2," and "vDU #2" and the deployment after the change in the nodes of the change target is a deployment in which "vCU #1" and "vDU #1" correspond to a slice ID "1" and "vCU #2" and "vDU #2" correspond to slice IDs "2" and "3." The configuration example 2 of the base station function deployment setting information has a smaller amount of information than the configuration example 1 of the base station function deployment setting information. Also, according to the configuration example 2 of the base station function deployment setting information, it is only necessary for the SMO function unit 11 to make a setting change to a slice designated by the slice ID after the change with respect to the node designated by the target node ID in the base station function deployment setting information and a setting change process is simple.

FIG. 11 shows the configuration example 3 of the base station function deployment setting information according to the present embodiment. In the configuration example 3 of the base station function deployment setting information of FIG. 11, a deployment of change targets and nodes after a change in the deployment of the change targets are shown. As illustrated in FIG. 11, an identifier (a target slice ID) of a slice of the deployment of the charge targets is associated with a node ID of a node after a change in the slice of the deployment of the change targets. In the change example of FIG. 8, the slice of the deployment of the charge targets is a slice ID "2" and the nodes after the change in the slice with the slice ID "2" are "vCU #2" and "vDU #2." The configuration example 3 of the base station function deployment setting information has a smaller amount of information than the configuration examples 1 and 2 of the base station function deployment setting information. According to the configuration example 3 of the base station function deployment setting information, the SMO function unit 11 determines the node before the change in the slice of the target slice ID designated in the configuration example 3 of the base station function deployment setting information and a setting change process is performed for each of both the node before the change and the node after the change.

As described above, according to the present embodiment, it is possible to change a base station function deployment in a radio access network (RAN) of an O-RAN specification as an advantageous effect.

Thereby, for example, it is possible to implement the improvement of overall service quality in radio access networks, thereby contributing to Goal 9 of the Sustainable Development Goals (SDGs) led by the United Nations: "Develop resilient infrastructure, promote sustainable industrialization, and expand innovation."

Although embodiments of the present invention have been described above with reference to the drawings, specific configurations are not limited to the embodiments and a change in design and the like may also be included without departing from the scope of the present invention.

Also, a computer program for implementing the function of each device described above may be recorded on a computer-readable recording medium and the program stored in the recording medium may be read and executed by a computer system. Also, the "computer system" used here may include an operating system (OS) or hardware such as peripheral devices.

Also, the "computer-readable recording medium" refers to a flexible disk, a magneto-optical disc, a read-only memory (ROM), a writable nonvolatile memory such as a flash memory, a portable medium such as a digital versatile disc (DVD), or a storage device such as a hard disk embedded in the computer system.

Further, the "computer-readable recording medium" is assumed to include a computer-readable recording medium for retaining the program for a predetermined time period as in a volatile memory (for example, a dynamic random-access memory (DRAM)) inside the computer system including a server and a client when the program is transmitted via a network such as the Internet or a communication circuit such as a telephone circuit.

Also, the above-described program may be transmitted from a computer system storing the program in a storage device or the like via a transmission medium or transmitted to another computer system by transmission waves in a transmission medium. Here, the "transmission medium" for transmitting the program refers to a medium having a function of transmitting information as in a network (a communication network) such as the Internet or a communication circuit (a communication line) such as a telephone circuit.

Also, the above-described program may be a program for implementing some of the above-described functions. Further, the above-described program may be a program capable of implementing the above-described function in combination with a program already recorded on the computer system, i.e., a so-called differential file (differential program).

### [Reference Signs List]

- 1: Radio access network (RAN)
- 2: Base station function group
- 10: SMO framework
- 11: SMO function unit
- 12: Non-RT RIC
- 20: Base station function deployment control unit
- 201: Base station function deployment information acquisition unit
- 202: Base station function deployment information storage unit
- 203: KPI acquisition unit
- 204: Base station function deployment setting information transmission unit
- 205: Control unit

## Claims

1. A base station function deployment control device comprising:
a base station function deployment information acquisition unit configured to acquire base station function deployment information indicating a current base station function deployment in a radio access network of an open radio access network (O-RAN) specification via an interface with a service and management orchestration (SMO) function unit; and
a base station function deployment setting information transmission unit configured to transmit base station function deployment setting information indicating change content for changing the base station function deployment in the radio access network via the interface.

2. The base station function deployment control device according to claim 1, wherein the base station function deployment control device is implemented using a non-real-time RAN intelligent controller (non-RT RIC).

3. The base station function deployment control device according to claim 1 or 2, wherein the base station function deployment setting information is information indicating all base station function deployments after a change in the radio access network.

4. The base station function deployment control device according to claim 1 or 2, wherein the base station function deployment setting information is information indicating a node of a change target in the radio access network and a deployment after a change in the node of the change target.

5. The base station function deployment control device according to claim 1 or 2, wherein the base station function deployment setting information is information indicating a deployment of a change target in the radio access network and a node after a change in the deployment of the change target.

6. A base station function deployment control method in a radio access network of an open radio access network (O-RAN) specification, the base station function deployment control method comprising:
a base station function deployment information acquisition step in which a base station function deployment control device acquires base station function deployment information indicating a current base station function deployment in the radio access network via an interface with a service and management orchestration (SMO) function unit; and
a base station function deployment setting information transmission step in which the base station function deployment control device transmits base station function deployment setting information indicating change content for changing the base station function deployment in the radio access network via the interface.

7. A computer program for causing a computer of a base station function deployment control device to execute:
a base station function deployment information acquisition step of acquiring base station function deployment information indicating a current base station function deployment in a radio access network of an open radio access network (O-RAN) specification via an interface with a service and management orchestration (SMO) function unit; and
a base station function deployment setting information transmission step of transmitting base station function deployment setting information indicating change content for changing the base station function deployment in the radio access network via the interface.
